# EUROPEAN PATENT SPECIFICATION

(11) **EP 4 478 245 B1**
(45) Date of publication and mention of the grant of the patent: **11.02.2026**
(21) Application number: 24165850.9
(22) Date of filing: 25.03.2024
(51) Int. Cl.: G06K 7/10

(54) **METHOD OF OPERATING RADIO FREQUENCY IDENTIFICATION (RFID) DEVICES ON A VEHICLE**
VERFAHREN ZUM BETRIEB VON RFID-VORRICHTUNGEN IN EINEM FAHRZEUG
PROCÉDÉ DE FONCTIONNEMENT DE DISPOSITIFS D'IDENTIFICATION PAR RADIOFRÉQUENCE (RFID) SUR UN VÉHICULE

(30) Priority: 14.06.2023 US 202318334710
(43) Date of publication of application: 18.12.2024
(73) Proprietor: The Boeing Company, Arlington, VA 22202 (US)
(72) Inventor: LOFTIS, Richard John, Arlington, 22202 (US); BOWMAN, David Richard, Arlington, 22202 (US); FROST, Cedar, Arlington, 22202 (US)
(74) Representative: Plasseraud IP

(56) References cited:
- EP-A1- 3 261 383
- US-A1- 2009 322 551
- US-A1- 2013 157 638
- US-A1- 2013 265 141

## Description

### TECHNOLOGICAL FIELD

The present disclosure relates generally to the field of operating devices that are located on a vehicle and, more specifically, to a method of operating the RFID devices within compliance when used on a vehicle that travels to different geographic locations.

### BACKGROUND

Vehicles such as but not limited to aircraft, ships, trains, and buses travel between different geographic locations. Examples include but are not limited to an aircraft that travels between different countries, a train that travels between different states, and a bus that travels between different cities. The different geographic locations have different regulations. This can include regulations on operating equipment that is located on the vehicle. The devices need to be adjusted as necessary to ensure compliance with the requirements of the current geographic location where the vehicle is located.

One type of equipment located on vehicles is Radio Frequency Identification devices (RFID devices). RFID devices are used for various functions, including but not limited to tracking cargo and monitoring the position of doors and compartments. Different countries have different operational requirements for the use of RFID devices. In one example, the UHF allocations for the different countries are governed by the International Organization for Standardization (ISO). Different countries are allocated different frequency ranges within a range of between 860 to 960 MHz. Example include the United States operating within 902-928 MHz, France operating within 865.6-867.6 MHz, and China operating within 920.5-924.5 MHz.

It is difficult to maintain compliance for RFID devices on a vehicle. An RFID device configured for use in a first country may require adjustment prior to use in a different country. There is a need for maintaining RFID devices in compliance when used on a vehicle that travels between different geographic locations.

US2013265141A1 discloses an RFID reader configured to determine the current geographic location and operate on the authorized frequency band associated with that geographic location. As such, this RFID reader enables compliance with frequency regulations even in an operating environment that frequently changes geographic location, such as an aircraft.

EP3261383A1 discloses a method of managing a plurality of individual nodes in a communication network, wherein one of the plurality of nodes is operating in the vicinity of a jurisdictional boundary and is expected to cross the boundary, comprising the steps of: a network controller retrieving, from a spectrum access database, operating parameter information for the node expected to cross the boundary, wherein the operating parameter information comprises operating parameters relating to a present location of the node and an expected future location; the network controller determining operating parameter information for use by the node, whereby the operating parameter information causes the node to comply with relevant regulations in the present and expected future location; and the network controller transmitting the determined operating parameter information to the node.

US2013157638A1 discloses that geographic position of a mobile device may be identified and used for determining the applicable local regulations. US2013157638A1 discloses to utilize the geographic position to establish the appropriate regulations for the current country/state/city of the device. When a mobile device registers to a mobile operator network then the mobile device may know in which country it has registered based on the MCC value. A look-up table (which may be remotely updated over the air with a push service) may list the applicable regulations, indexed by MCC or using an equivalent look-up capability.

US2009322551A1 discloses to leverage location data corresponding to the current geographical location of a wireless system. That location data is used to configure the wireless equipment for compatibility with the rules of the local regulatory regime to ensure compliance. US2009322551A1 also discloses that compliance with aircraft regulations is particularly important to ensure that wireless devices do not interfere with communications, navigation, and locating systems, such as radar systems.

### SUMMARY

One aspect is directed to a method of operating radio frequency identification (RFID) devices on an aircraft as per the appended claims.

One aspect is directed to a computing device configured to operate RFID devices as per the appended claims.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is a schematic diagram of a vehicle equipped with a computing device and an RFID system.
Figure 2 is schematic diagram of a computing device connected to an RFID system.
Figure 3 is a flowchart diagram of a method of operating a radio frequency identification (RFID) device on a vehicle.
Figure 4 is a schematic diagram of a computing device communicatively connected to a navigation system and an RFID system.
Figure 5 is a schematic diagram of the operation of a computing device to operate an RFID system in compliance with an operational requirement.
Figure 6 is a flowchart diagram of a method of operating RFID devices on a vehicle.

### DETAILED DESCRIPTION

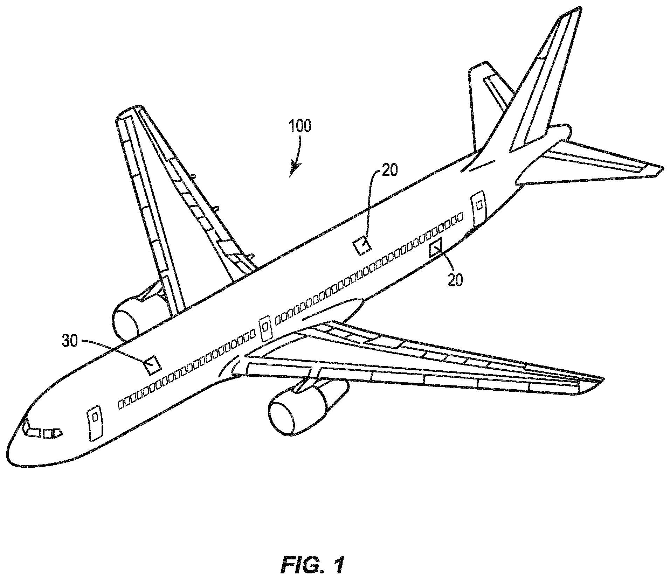

Figure 1 illustrates an example of an aircraft 100 that travels to different geographic locations. In this example, the vehicle 100 is an aircraft configured to fly routes of a variety of different geographic locations. The vehicle 100 can be equipped to transport passengers and/or cargo. The vehicle 100 is equipped with an Radio Frequency Identification (RFID) system 20 that provides for passive reading of identifying information. RFID system 20 can be used for a variety of different functions. Examples include but are not limited to monitoring luggage or cargo, monitoring life vests or other safety devices, and monitoring the orientation components such as overhead compartment doors and monument doors. A computing device 30 is configured to control the operation of the RFID system 20 to ensure compliance with the geographic-dependent operating parameters.

The RFID system 20 operates in accordance with the requirements of the geographic location where the vehicle 100 is located. The size of the geographic location can vary with examples including but not limited to a country (e.g., Germany), a state (e.g., North Carolina, USA), a region (e.g., Europe), and a city (Paris). The operational requirements can vary. In some examples, an operational requirement includes a frequency range with minimum and maximum allowable levels. Specific examples include the United States operating within a frequency range of 902-928 MHz, France operating within 865.6-867.6 MHz, and China operating within 920.5-924.5 MHz. One specific requirement is an Ultra High Frequency (UHF) spectrum regulatory operational requirement for operating the RFID devices 21. Other examples of operational requirements include but are not limited: power levels for operation that include the maximum wattage allowed and calculated as Effective Radiated Power (ERP) or Equivalent Isotropic Radiated Power (EIRP); and reader-tag communication techniques such as Frequency Hopping Spread Spectrum (FHSS), Listen Before Talk (LBT), and European Telecommunications Standards (ETSI).

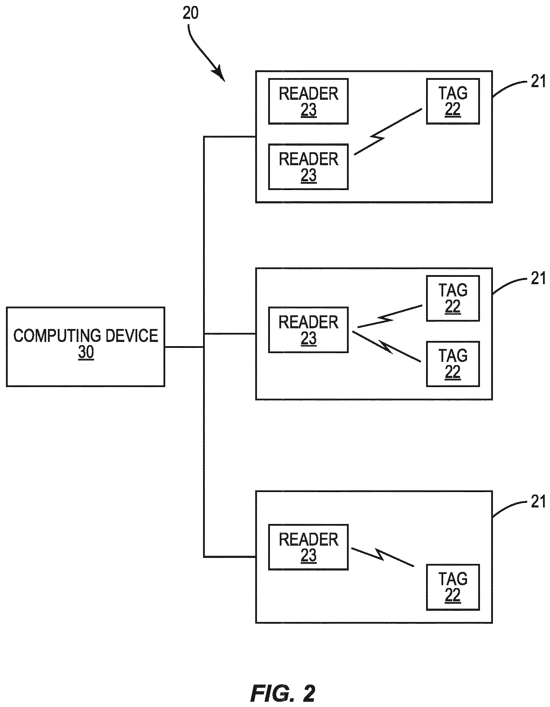

Figure 2 schematically illustrates an RFID system 20 that is operatively connected to a computing device 30. The connection can be in various manners, such as but not limited to a wireless network or through wired connections. The RFID system 20 is a passive system and includes one or more RFID devices 21 with tags 22 and readers 23. The tags 22 are configured to be attached to an object that is to be tracked/monitored. The readers 23 have antennas that emit an electromagnetic interrogation pulse. In response, the tags 22 transmit digital data, such as an identification number or object information back to the reader 23. In some examples, the collected information is transmitted to the computing device 30 that processes the information. In other examples, the information is transmitted to a different system for processing.

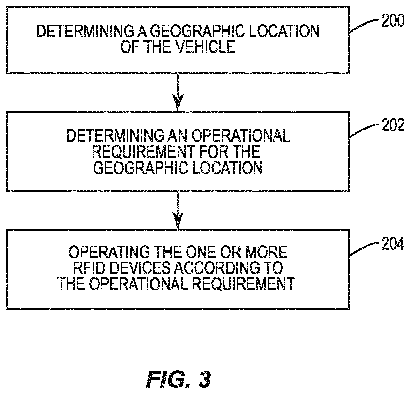

The computing device 30 is configured to determine the geographic location of the vehicle 100 and to operate the RFID system 20 in accordance with the one or more operational requirements for the geographic location. Figure 3 illustrates a flowchart of the operation of the computing device 30. The computing device 30 determines the geographic location of the vehicle 100 (block 200). This occurs upon the vehicle 100 experiencing an event such as an arrival, departure, powering on, and taxiing. The computing device 30 determines an operational requirement for the one or more RFID devices 21 for the geographic location (block 202). The computing device 30 then operates the one or more RFID devices 21 according to the operational requirement (block 204).

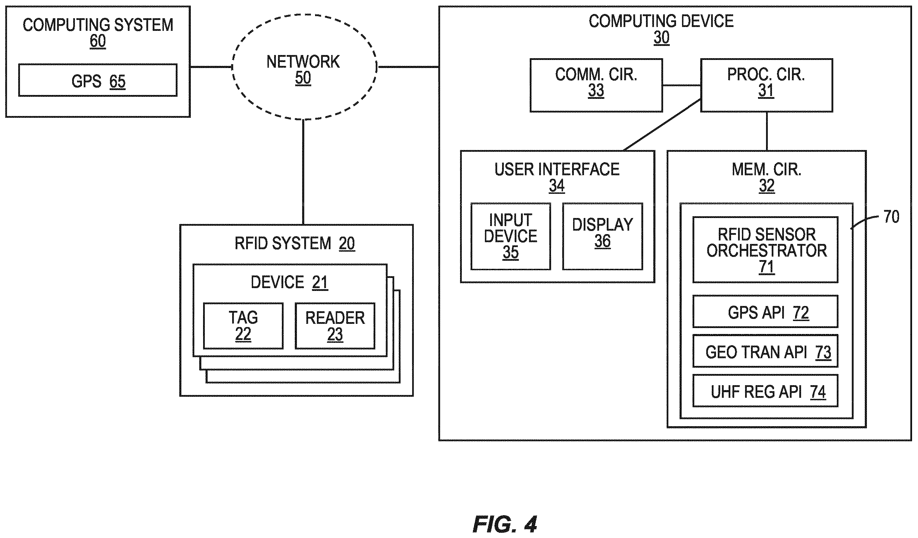

Figure 4 illustrates a computing device 30 that operates the RFID system 20. The computing device 30 includes processing circuitry 31 that controls the operation of the RFID system 20 according to program instructions 70 stored in memory circuitry 32. The processing circuitry 31 includes one or more circuits, microcontrollers, microprocessors, hardware, or a combination thereof. Memory circuitry 32 includes a non-transitory computer readable storage medium storing the program instructions 70 that configures the processing circuitry 31 to implement one or more of the techniques discussed herein. Memory circuitry 32 can include various memory devices such as, for example, read-only memory, and flash memory. Memory circuitry 32 can be a separate component as illustrated in Figure 4 or can be incorporated with the processing circuitry 31.

The programming instructions 70 include an RFID sensor orchestrator 71 that provides for configuring the RFID system 20 including the one or more RFID devices 21 to operate in accordance with the applicable geographic requirements. The programming instructions 70 further include one or more application programming interfaces (APIs) that are software modules that are executable to facilitate the exchange of data files between one or more of the computing device 30, the a computing system 60, and the RFID system 20. In one example as illustrated in Figure 4, the programming instructions 70 includes a GPS API 72, a Geolocation Translation API 73, and a UHF Regulation API 74.

Communication circuitry 33 provides for communications with the computing system 60 located onboard the vehicle 100 and/or remotely away from the vehicle 100. The communication circuitry 33 also provides for communicating with the RFID system 20. In some examples, the communication is through a network 50 located on the vehicle 100. The network 50 comprises a medium configured to provide communication links between various devices and systems. The network 50 can include connections such as wired or wireless communications links, fiber optic cables, and/or any other suitable medium for transmitting and/or communicating data between devices and/or systems.

In some examples, the communication circuitry 33 includes a WLAN interface configured to communicate with a local area network 50, e.g., via a wireless access point. An exemplary WLAN interface operates according to the 802.11 family of standards, which is commonly known as a WiFi interface. In some examples, the communication circuitry 33 includes a personal area network interface, such as a Bluetooth interface. In some examples, the communication circuitry 33 includes a cellular interface that enables communication with a mobile communication network (e.g., a WCDMA, LTE, or WiMAX network).

A user interface 34 provides for a person such as flight personnel, a technician, or other to control one or more aspects of the computing device 30. The user interface 34 includes one or more input devices 35 such as but not limited to a keypad, touchpad, roller ball, and joystick that provide for entering commands to the processing circuitry 31. The user interface 34 can also include one or more displays 36 for displaying information.

The computing device 30 communicates with the computing system 60 on the vehicle 100. The computing system 60 can include a single system that controls one or more functions of the vehicle 100, or two or more separate systems that are interconnected through the network 50. Examples of systems 60 include but are not limited to a flight control system, a flight control surface system, a navigation system, an engine system, an autopilot system, a collision avoidance system, and a weather radar system.

Figure 4 includes an example in which the computing system 60 includes navigational functionality. The computing system 60 monitors the geographic location of the vehicle 100. In some examples, the navigation computing system 60 includes a global positioning system (GPS) unit 65 that includes a transmitter that communicates with one or more satellites and ground stations that measure the latitude and longitude. The GPS unit 65 further includes a receiver that receives the location information.

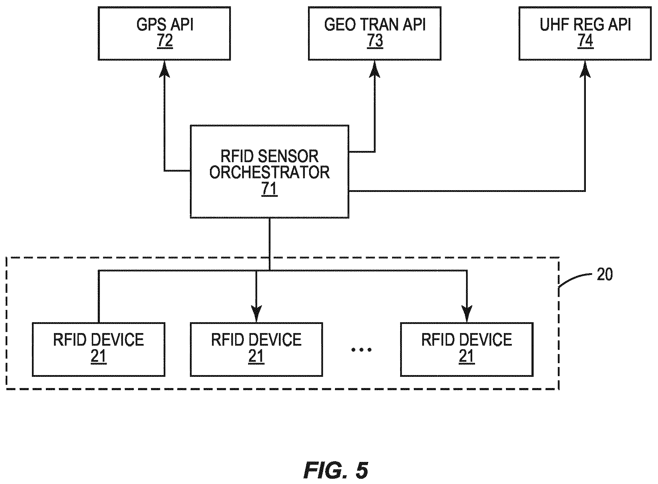

Figure 5 illustrates the functioning of the computing device 30 to operate the RFID devices 21 of the RFID system 20 in compliance with the applicable geographic requirements. The computing device 30 operates according to instructions of the RFID Sensor Orchestrator 71. The RFID Sensor Orchestrator 71 issues a read command for the geographic location of the vehicle 100. This request occurs in response to an event by the vehicle 100, such as an arrival (e.g., landing), departure, taxiing, and power on of a part or entirety of the computing system 60 on the vehicle 100. In other examples, this occurs on a periodic basis such but not limited to hourly, every six hours, and at the same one or more times each day (e.g., noon, midnight). The GPS API 72 returns the geographic location from the GPS unit 65 of the computing system 60. In some examples, the reply from the GPS API 72 is a floating point value pair that represents the current latitude and longitude readings.

Upon receiving the GPS data, the RFID sensor orchestrator 71 polls the Geolocation Translation API 73 for the code that corresponds to the current geographic location. The polling includes providing the geographic location data obtained from the GPS API 72. In return, the Geolocation Translation API 73 provides the code corresponding to the provided GPS data. The code includes one or more of a country code, a city code, a state code, and a region code. In some examples, the Geolocation Translation API 73 returns one or more alpha-2, alpha-3, or numeric country codes.

The RFID sensor orchestrator 71 then queries the UHF Regulation API 74 with the one or more codes. The UHF Regulation API 74 returns the one or more operational requirements for operating the RFID system 20 that correspond to the one or more condes. In some examples, an operational requirement includes a frequency range that includes minimum and maximum allowable levels. Other examples of operational requirements include but are not limited: power levels for operation that include the maximum wattage allowed and reader-tag communication techniques.

The RFID sensor orchestrator 71 determines whether the RFID system 20 is operating in accordance with the one or more operational requirements. The settings on the RFID devices 21 are adjusted as necessary to operate within the requirements for the identified country.

In some examples, the RFID sensor orchestrator 71 polls the RFID devices 21 for the one or more current operational settings (e.g., current frequency band). The current operational settings (e.g., frequency band) for the readers 23 are stored in an RFID reader map data structure. The map data structure is then reviewed and compared to the operational requirements returned from the UHF Regulation API 74. The RFID devices 21 that are within compliance are maintained. Those that are out of compliance are adjusted as necessary. In some examples, for each RFID device 21 that is determined to be in an incompatible operational setting, a Change command (e.g., Frequency_Change command) is sent to the corresponding RFID Device 21. In some examples, the RFID device 21 may use Software-Defined Radio (SDR) technology to change the frequency band in accordance with the one or more operational requirements. The SDR RFID device may, in some examples, change the frequency band based on processing, filtering and decoding the signal data entirely via software code. In some examples, the RFID device 21 may be a multi-frequency RFID device to operate across several distinct radio frequency bands, to be in accordance with the one or more operational requirements. The multi-frequency RFID device may, in some examples, comprise a combination of tunable radio frequency components, such as filters and amplifiers, and software controls that dictate the operational mode of the device. In some examples, changing or varying a current frequency band of the RFID device 21 may for example comprise selectively coupling electrical elements, such as capacitive elements, inductive elements, or combinations thereof.

For example, different countries may have different operational requirements for the use of RFID devices 21. In one example, the UHF allocations for the different countries are governed by the International Organization for Standardization (ISO). Different countries are allocated different frequency ranges within a range of between 860 to 960 MHz. Considering the frequency change between 860 to 960 MHz, the RFID device 21 is designed to change the frequency, in some examples, within 100 MHz or less. As the change of frequency within the RFID device 21 may be relatively narrow (depending on the specific design and UHF allocations where the RFID device 21 is intended to be used), the frequency band can be easily changed within the RFID device 21, without need to incorporate an additional hardware including, for example, other RFID devices operating at different frequency bands that would cover the required frequency band change.

The process of determining the geographical location, the country code, the operational requirements, as well as determining the frequency settings of the RFID devices 21 and making changes as necessary are saved in an event logging system maintained in the flight system. This log can be used for various reasons, such as for maintenance, operational compliance, inspections, etc.

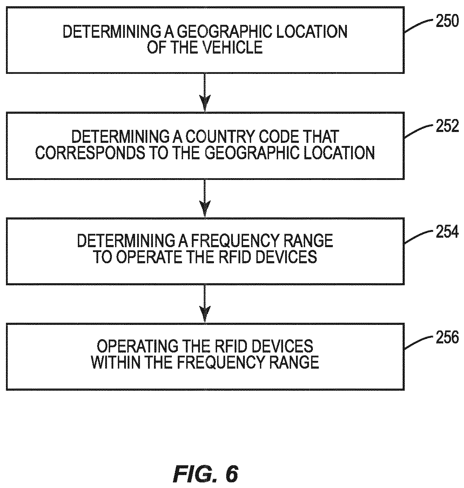

Figure 6 illustrates a method of operating RFID devices 21 on a vehicle 100. The method determines a geographic location of the vehicle 100 (block 250). A country code is then determined that corresponds to the geographic location (block 252). A frequency range of operation of the RFID devices 21 is determined that corresponds to the country code (block 254). The RFID devices 21 are operated within the frequency range while the vehicle 100 is at the geographic location (block 256).

In some examples, the computing device 30 obtains information from an on-board source for the operation of the RFID devices 21. In other examples, the computing device 30 obtains the information from a remote source that is not on the vehicle 100. For example, the computing device 30 communicates with a remote node of an owner of the vehicle 100 that maintains the various operational requirements. In some examples, the computing device 30 communicates with a governmental authority for the one or more operational requirements.

The computing system 60 and the RFID system 20 include processing circuitry, memory circuitry, and communication circuitry to perform the functions and communicate with the computing device 30. In some examples, the systems are microprocessor-based such as a computer having at least one processor, memory (RAM and/or ROM), and associated input and output buses. In some examples, the processor operates under the control of an operating system that resides in memory. In some examples, the operating system manages computer resources so that computer program code embodied as one or more computer software applications, such as an application residing in memory, includes instructions executed by the processor. In some examples, the processor executes the application directly, in which case the operating system may be omitted.

In some examples, the program instructions 70 are stored in the memory circuitry 32. In other examples, the program instructions 70 are located in a functional form on computer-readable media that is selectively removable and may be loaded onto or transferred to the computing device 30 for execution by the processing circuitry 31. In some examples, the program instructions 70 include computer-readable storage media or computer-readable signal media. Computer-readable storage media may include, for example, an optical or magnetic disk that is inserted or placed into a drive or other device that is part of memory circuitry 32. Computer-readable storage media also may take the form of a persistent storage, such as a hard drive, a thumb drive, or a flash memory, that is connected to the computing device. In some examples, computer-readable storage media is a non-transitory, physical or tangible storage device used to store program instructions.

In some examples, the program instructions 70 are transferred to the computing device 30, e.g., remotely over a network, using computer-readable signal media. Computer-readable signal media may be, for example, a propagated data signal containing the program instructions 70. In some examples, the computer-readable signal media is an electromagnetic signal, an optical signal, and/or any other suitable type of signal. These signals may be transmitted over communications links, such as wireless communications links, optical fiber cable, coaxial cable, a wire, and/or any other suitable type of communications link. In other words, the communications link and/or the connection may be physical or wireless in the illustrative examples. In some examples, program instructions 70 are downloaded over a network from another device or data processing system through computer-readable signal media for use within the computing device 30.

In some examples, the program instructions 70 include an operating system (OS). The OS is stored in memory circuitry 32 and controls and allocates resources of the computing device 30. The OS includes any suitable software system configured to manage and expose hardware resources of the computing device 30. In some examples, OS provides APIs that facilitate connection of different type of hardware and/or provide applications access to hardware and OS services. In some examples, certain applications may provide further services for use by other applications, e.g., as is the case with so-called "middleware."

The methods disclosed can be used on a variety of aircraft 100. Aircraft 100 include manned aircraft, unmanned aircraft, and combinations thereof.

The present disclosure can be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

## Claims

1. A method of operating radio frequency identification (RFID) devices (21) on an aircraft (100), the method comprising:
determining (200) a geographic location of the aircraft (100);
based on the geographic location of the aircraft (100), determining (202) an operational requirement for the RFID devices (21);
operating (204) the RFID devices (21) according to the operational requirement; and
determining that an event has occurred with the aircraft and determining the geographic location after the occurrence of the event, whereby the event comprises one or more of an arrival, departure, powering on, and taxiing.

2. The method of claim 1, further comprising adjusting a setting on the RFID devices (21) resulting in the RFID devices (21) operating according to the operational requirement.

3. The method of claim 1 or 2, further comprising determining the geographic location of the aircraft (100) upon arrival of the aircraft (100) at a destination.

4. The method of any one of claims 1 to 3, wherein determining the geographic location of the aircraft (100) comprises determining latitude and longitude of the aircraft (100) and determining a country code corresponding to the latitude and longitude.

5. The method of any one of claims 1 to 4, further comprising:
determining a current frequency setting for the RFID devices (21);
determining that the current frequency setting for the RFID devices (21) is outside of a frequency range of the operational requirement; and
adjusting the RFID devices (21) to operate within the frequency range.

6. The method of any one of claims 1 to 5, wherein determining the operational requirement for the RFID devices (21) comprises determining a power level of the RFID devices (21).

7. The method of any one of claims 1 to 6, further comprising determining the geographic location and the operational requirement from one or more sources that are located on the aircraft (100).

8. The method of any one of claims 1 to 7, wherein determining the operation requirement comprises determining a UHF spectrum regulatory operational requirement for operating the RFID devices (21) within a country where the aircraft (100) is located.

9. The method of any of claims 1 to 8, further comprising:
determining a country code that corresponds to the geographic location;
determining a frequency range of operation of the RFID devices (21) that corresponds to the country code; and
operating the RFID devices (21) within the frequency range while the aircraft (100) is at the determined geographic location.

10. The method of claim 9, further comprising polling an onboard computing system (60) that is on the aircraft (100) and determining one or more of the geographic location, the country code, and the frequency range.

11. The method of claim 9 or 10, wherein determining the country code comprises determining an alpha-3 country code that corresponds to the geographic location.

12. The method of any one of claims 9 to 11, wherein determining the frequency range of operation of the RFID devices (21) that corresponds to the country code comprises determining a UHF spectrum regulatory operational requirement for operating the RFID devices (21) within a country where the aircraft (100) is located.

13. A computing device (30) configured to operate RFID devices (21) on an aircraft (100), the computing device (30) comprising:
memory circuitry (32) configured to store program instructions; and
processing circuitry (31) configured to execute the program instructions to cause the computing device (30) to:
determine a geographic location of the aircraft (100);
determine a country code that corresponds to the geographic location;
determine a frequency range of operation for the RFID devices (21) that corresponds to the country code;
operate the RFID devices (21) within the frequency range; and
determine that an event has occurred with the aircraft and determine the geographic location after the occurrence of the event, whereby the event comprises one or more of an arrival, departure, powering on, and taxiing.

14. The computing device of claim 13, wherein the processing circuitry (31) is further configured to transmit commands to adjust an operational feature of the RFID devices (21) to operate within the frequency range.

15. The computing device of claim 13 or 14, wherein the processing circuitry (31) is configured to determine that one or more of the RFID devices (21) are operating within the frequency range and to prevent adjustment of the one or more RFID devices (21).

## Patentansprüche

1. Verfahren zum Betreiben von Hochfrequenz-Identifikation (RFID) Vorrichtungen (21) an einem Flugzeug (100), wobei das Verfahren aufweist:
Bestimmen (200) eines geographischen Orts des Flugzeugs (100);
auf Basis des geographischen Orts des Flugzeugs (100), Bestimmen (202) einer Betriebsanforderung für die RFID-Vorrichtungen (21);
Betreiben (204) der RFID-Vorrichtungen (21) gemäß der Betriebsanforderung; und
Bestimmen, dass ein Ereignis mit dem Flugzeug stattgefunden hat, und Bestimmen des geographischen Orts nach Stattfinden des Ereignisses, wobei das Ereignis eines oder mehr der folgenden aufweist: Ankunft, Abflug, Leistungsaktivierung und Rollen.

2. Verfahren nach Anspruch 1, ferner aufweisend Anpassen einer Einstellung an den RFID-Vorrichtungen (21), wodurch die RFID-Vorrichtungen (21) gemäß der Betriebsanforderung arbeiten.

3. Verfahren nach Anspruch 1 oder 2, ferner aufweisend Bestimmen des geographischen Orts des Flugzeugs (100) bei Ankunft des Flugzeugs (100) an einem Ziel.

4. Verfahren nach einem der Ansprüche 1 bis 3, wobei Bestimmen des geographischen Orts des Flugzeugs (100) aufweist: Bestimmen von geographischer Breite und geographischer Länge des Flugzeugs (100) und Bestimmen eines der geographischen Breite und geographischen Länge entsprechenden Ländercodes.

5. Verfahren nach einem der Ansprüche 1 bis 4, ferner aufweisend:
Bestimmen einer aktuellen Frequenzeinstellung für die RFID-Vorrichtungen (21);
Bestimmen, dass die aktuelle Frequenzeinstellung für die RFID-Vorrichtungen (21) außerhalb eines Frequenzbereichs der Betriebsanforderung ist; und
Anpassen der RFID-Vorrichtungen (21), um in dem Frequenzbereich zu arbeiten.

6. Verfahren nach einem der Ansprüche 1 bis 5, wobei Bestimmen der Betriebsanforderung für die RFID-Vorrichtungen (21) aufweist: Bestimmen eines Leistungspegels der RFID-Vorrichtungen (21).

7. Verfahren nach einem der Ansprüche 1 bis 6, ferner aufweisend Bestimmen des geographischen Orts und der Betriebsanforderung aus einer oder mehreren Quellen, die sich an dem Flugzeug (100) befinden.

8. Verfahren nach einem der Ansprüche 1 bis 7, wobei Bestimmen der Betriebsanforderung aufweist: Bestimmen einer regulatorischen UHF-Spektrum-Betriebsanforderung zum Betreiben der RFID-Vorrichtungen (21) in einem Land, in dem sich das Flugzeug (100) befindet.

9. Verfahren nach einem der Ansprüche 1 bis 8, ferner aufweisend:
Bestimmen eines Ländercodes, der dem geographischen Ort entspricht;
Bestimmen eines Betriebsfrequenzbereichs der RFID-Vorrichtungen (21), der dem Ländercode entspricht; und
Betreiben der RFID-Vorrichtungen (21) in dem Frequenzbereich, während das Flugzeug (100) sich an dem bestimmten geographischen Ort befindet.

10. Verfahren nach Anspruch 9, ferner aufweisend Abfragen eines Bordcomputersystems (60), das sich in dem Flugzeug (100) befindet, und Bestimmen des geographischen Orts und/oder des Ländercodes und/oder des Frequenzbereichs.

11. Verfahren nach Anspruch 9 oder 10, wobei Bestimmen des Ländercodes aufweist: Bestimmen eines Alpha-3-Ländercodes, der dem geographischen Ort entspricht.

12. Verfahren nach einem der Ansprüche 9 bis 11, wobei Bestimmen des Betriebsfrequenzbereichs der RFID-Vorrichtungen (21), der dem Ländercode entspricht, aufweist: Bestimmen einer regulatorischen UHF-Spektrum-Betriebsanforderung zum Betreiben der RFID-Vorrichtungen (21) in einem Land, in dem sich das Flugzeug (100) befindet.

13. Computervorrichtung (30), die zum Betreiben von RFID-Vorrichtungen (21) an einem Flugzeug (100) konfiguriert ist, wobei die Computervorrichtung (30) aufweist:
Speicherschaltungen (32), die konfiguriert sind, Programmbefehle zu speichern; und
Verarbeitungsschaltungen (31), die konfiguriert sind, die Programmbefehle auszuführen, um die Computervorrichtung (30) zu veranlassen:
einen geographischen Ort des Flugzeugs (100) zu bestimmen;
einen Ländercode, der dem geographischen Ort entspricht, zu bestimmen;
einen Betriebsfrequenzbereich für die RFID-Vorrichtungen (21), der dem Ländercode entspricht, zu bestimmen;
die RFID-Vorrichtungen (21) in dem Frequenzbereich zu betreiben; und
zu bestimmen, dass ein Ereignis mit dem Flugzeug stattgefunden hat, und nach Stattfinden des Ereignisses den geographischen Ort zu bestimmen, wobei das Ereignis eines oder mehr der folgenden aufweist: Ankunft, Abflug, Leistungsaktivierung und Rollen.

14. Computervorrichtung nach Anspruch 13, wobei die Verarbeitungsschaltungen (31) ferner konfiguriert sind, Befehle zu senden, um ein Betriebsmerkmal der RFID-Vorrichtungen (21) anzupassen, so dass sie in dem Frequenzbereich arbeiten.

15. Computervorrichtung nach Anspruch 13 oder 14, wobei die Verarbeitungsschaltungen (31) konfiguriert sind, zu bestimmen, dass eine oder mehr der RFID-Vorrichtungen (21) in dem Frequenzbereich arbeiten, und Anpassung der einen oder mehr RFID-Vorrichtungen (21) zu verhindern.

## Revendications

1. Procédé de fonctionnement de dispositifs d'identification par radiofréquence (RFID) (21) sur un aéronef (100), le procédé comprenant :
la détermination (200) d'un emplacement géographique de l'aéronef (100) ;
sur la base de l'emplacement géographique de l'aéronef (100), la détermination (202) d'une exigence de fonctionnement pour les dispositifs RFID (21) ;
le fonctionnement (204) des dispositifs RFID (21) conformément à l'exigence de fonctionnement ; et
le fait de déterminer qu'un événement est survenu avec l'aéronef et la détermination de l'emplacement géographique après la survenue de l'événement, moyennant quoi l'événement comprend un ou plusieurs événements parmi une arrivée, un départ, une mise sous tension et un roulage.

2. Procédé selon la revendication 1, comprenant en outre l'ajustement d'un réglage sur les dispositifs RFID (21), ce qui permet aux dispositifs RFID (21) de fonctionner conformément aux exigences de fonctionnement.

3. Procédé selon la revendication 1 ou 2, comprenant en outre la détermination de l'emplacement géographique de l'aéronef (100) à l'arrivée de l'aéronef (100) à une destination.

4. Procédé selon l'une quelconque des revendications 1 à 3, dans lequel la détermination de l'emplacement géographique de l'aéronef (100) comprend la détermination de la latitude et de la longitude de l'aéronef (100) et la détermination d'un code pays correspondant à la latitude et à la longitude.

5. Procédé selon l'une quelconque des revendications 1 à 4, comprenant en outre :
la détermination d'un réglage de fréquence en cours pour les dispositifs RFID (21) ;
le fait déterminer que le réglage de fréquence en cours des dispositifs RFID (21) est en dehors d'une plage de fréquences de l'exigence de fonctionnement ; et
l'ajustement des dispositifs RFID (21) pour qu'ils fonctionnent dans la plage de fréquences.

6. Procédé selon l'une quelconque des revendications 1 à 5, dans lequel la détermination de l'exigence de fonctionnement pour les dispositifs RFID (21) comprend la détermination d'un niveau de puissance des dispositifs RFID (21).

7. Procédé selon l'une quelconque des revendications 1 à 6, comprenant en outre la détermination de l'emplacement géographique et de l'exigence de fonctionnement à partir d'une ou de plusieurs sources qui sont situées sur l'aéronef (100).

8. Procédé selon l'une quelconque des revendications 1 à 7, dans lequel la détermination de l'exigence de fonctionnement comprend la détermination d'une exigence de fonctionnement réglementaire de spectre UHF pour le fonctionnement des dispositifs RFID (21) dans un pays où l'aéronef (100) est situé.

9. Procédé selon l'une quelconque des revendications 1 à 8, comprenant en outre :
la détermination d'un code pays qui correspond à l'emplacement géographique ;
la détermination d'une plage de fréquences de fonctionnement des dispositifs RFID (21) qui correspond au code pays ; et
le fonctionnement des dispositifs RFID (21) dans la plage de fréquences pendant que l'aéronef (100) se trouve à l'emplacement géographique déterminé.

10. Procédé selon la revendication 9, comprenant en outre l'interrogation d'un système informatique embarqué (60) qui se trouve sur l'aéronef (100) et la détermination d'un ou plusieurs éléments parmi l'emplacement géographique, le code pays et la plage de fréquences.

11. Procédé selon la revendication 9 ou 10, dans lequel la détermination du code pays comprend la détermination d'un code pays alpha-3 qui correspond à l'emplacement géographique.

12. Procédé selon l'une quelconque des revendications 9 à 11, dans lequel la détermination de la plage de fréquences de fonctionnement des dispositifs RFID (21) qui correspond au code pays comprend la détermination d'une exigence de fonctionnement réglementaire de spectre UHF pour le fonctionnement des dispositifs RFID (21) dans un pays où l'aéronef (100) est situé.

13. Dispositif informatique (30) configuré pour faire fonctionner des dispositifs RFID (21) sur un aéronef (100), le dispositif informatique (30) comprenant :
une circuiterie de mémoire (32) configurée pour stocker des instructions de programme ; et
une circuiterie de traitement (31) configurée pour exécuter les instructions de programme afin d'amener le dispositif informatique (30) à :
déterminer un emplacement géographique de l'aéronef (100) ;
déterminer un code pays qui correspond à l'emplacement géographique ;
déterminer une plage de fréquences de fonctionnement pour les dispositifs RFID (21) qui correspond au code pays ;
faire fonctionner les dispositifs RFID (21) dans la plage de fréquences ; et
déterminer qu'un événement est survenu avec l'aéronef et déterminer l'emplacement géographique après la survenue de l'événement, moyennant quoi l'événement comprend un ou plusieurs événements parmi une arrivée, un départ, une mise sous tension et un roulage.

14. Dispositif informatique selon la revendication 13, dans lequel la circuiterie de traitement (31) est en outre configurée pour transmettre des ordres pour ajuster une particularité opérationnelle des dispositifs RFID (21) pour qu'ils fonctionnent dans la plage de fréquences.

15. Dispositif informatique selon la revendication 13 ou 14, dans lequel la circuiterie de traitement (31) est configurée pour déterminer qu'un ou plusieurs parmi les dispositifs RFID (21) fonctionnent dans la plage de fréquences et pour empêcher l'ajustement des un ou plusieurs dispositifs RFID (21).
